# EUROPÄISCHE PATENTSCHRIFT

(11) **EP 3 201 999 B1**
(45) Veröffentlichungstag und Bekanntmachung des Hinweises auf die Patenterteilung: **11.05.2022**
(21) Anmeldenummer: 15785059.5
(22) Anmeldetag: 01.10.2015
(51) Int. Cl.: H01S 3/067, H01S 3/094, H01S 3/23, H01S 3/04, H01S 3/042

(54) **LICHTWELLENLEITER**
OPTICAL WAVEGUIDE
FIBRE OPTIQUE

(30) Priorität: 01.10.2014 DE 102014014315
(43) Veröffentlichungstag der Anmeldung: 09.08.2017
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: JÁUREGUI MISAS, César, 07745 Jena (DE); TÜNNERMANN, Andreas, 99425 Weimar (DE); LIMPERT, Jens, 07751 Jena (DE); GAIDA, Christian, 07745 Jena (DE)
(74) Vertreter: Isfort, Olaf
(86) Internationale Anmeldenummer: PCT/EP2015/072656
(87) Internationale Veröffentlichungsnummer: WO 2016/050898

(56) Entgegenhaltungen:
- WO-A1-2014/087468
- US-A1- 2002 024 727
- US-A1- 2003 048 524
- US-A1- 2009 245 295
- US-A1- 2012 069 428
- US-A1- 2013 235 448
- US-A1- 2014 010 246
- MU XIAODONG ET AL: "Double clad YAG crystalline fiber waveguides for diode pumped high power lasing", PROCEEDINGS OF SPIE, S P I E - INTERNATIONAL SOCIETY FOR OPTICAL ENGINEERING, US, Bd. 8959, 28. Februar 2014 (2014-02-28), Seiten 895906-895906, XP060034078, ISSN: 0277-786X, DOI: 10.1117/12.2048223 ISBN: 978-1-62841-730-2
- MU XIAODONG ET AL: "True crystalline fibers: double-clad LMA design concept of Tm:YAG-core fiber and its mode simulation", FIBER LASERS IX: TECHNOLOGY, SYSTEMS, AND APPLICATIONS, SPIE, 1000 20TH ST. BELLINGHAM WA 98225-6705 USA, Bd. 8237, Nr. 1, 8. März 2012 (2012-03-08) , Seiten 1-5, XP060023431, DOI: 10.1117/12.910527 [gefunden am 1901-01-01]
- SOLEIMANI NAZILA ET AL: "Coilable single crystals fibers of doped-YAG for high power laser applications", PROCEEDINGS OF SPIE, S P I E - INTERNATIONAL SOCIETY FOR OPTICAL ENGINEERING, US, Bd. 8959, 28. Februar 2014 (2014-02-28), Seiten 895903-895903, XP060034076, ISSN: 0277-786X, DOI: 10.1117/12.2048214 ISBN: 978-1-62841-730-2

## Beschreibung

Die Erfindung betrifft eine optische Anordnung nach dem Oberbegriff des Anspruchs 1 sowie ein Verfahren zur Herstellung eines Lichtwellenleiters für eine solche optische Anordnung.

Lichtwellenleiter (auch als "optische Fasern" bezeichnet) sind in verschiedenen Ausgestaltungen aus dem Stand der Technik bekannt. Lichtwellenleiter sind Leitungen zur Übertragung von Licht. Die bekannten Lichtwellenleiter sind dielektrische Wellenleiter, die aus konzentrischen Schichten aufgebaut sind. Im Zentrum liegt ein lichtführender Kern, der umschlossen ist von einem Mantel, der einen gegenüber dem Kern niedrigeren Brechungsindex aufweist. Bei kommerziellen Lichtwellenleitern sind außerdem den Mantel umgebende Schutzschichten aus Kunststoff vorgesehen. Je nach Anwendungsfall hat der Kern einen Durchmesser von einigen Mikrometern bis zu über einem Millimeter. Man unterscheidet Lichtwellenleiter unter anderem nach der Anzahl von ausbreitungsfähigen Moden der elektromagnetischen Strahlung des Lichts, die durch den Kerndurchmesser limitiert wird (Singlemode-/Multimodefasern).

Die Weiterentwicklung von Faserlasern in jüngster Zeit hat dazu geführt, dass Lichtwellenleiter als aktives Medium ein zuverlässiges Konzept für Hochleistungslaser liefern. Die Entwicklung von Niedrigenergielasern zu Hochleistungslasern für industrielle Anwendungen basiert auf der Fähigkeit von Lichtwellenleitern, hohe Leistung handhaben zu können. Das sehr gute Verhältnis von Oberfläche zu aktivem Volumen erlaubt es, Wärme effizient abzuführen. Dies ist eine hervorragende Voraussetzung für einen Hochleistungsbetrieb. Allerdings führen Bedingungen im Lichtwellenleiter zu anderen Problemen. So führt beispielsweise die Einschränkung des Lichtsignals auf den Kern des Lichtwellenleiters zu hoher Lichtintensität und zu Wechselwirkungen zwischen dem Material des Lichtwellenleiters und dem Lichtsignal. Dabei entstehen insbesondere auch schwer zu kontrollierende nichtlineare Effekte. Damit wird die Signalqualität stark beeinträchtigt.

Lichtwellenleiter sollten demnach derart ausgelegt werden, dass nichtlineare Effekte und Wechselwirkungen mit dem Fasermaterial reduziert werden. Am einfachsten und effektivsten werden nichtlineare Effekte durch ein Vergrößern des Durchmessers des Kerns reduziert. Dadurch wird zum einen die Intensität des Lichts im Kern reduziert und zum anderen kann, beispielsweise bei doppelmanteligen Lichtwellenleitern, die Absorption von Pumplicht erhöht werden. Aufgrund der verbesserten Absorption des Pumplichts kann der Lichtwellenleiter verkürzt werden und damit können nichtlineare Effekte weiter reduziert werden.

Bei einem großen Kerndurchmesser des Lichtwellenleiters ist es allerdings schwierig, einen Singlemode-Betrieb oder auch einen Betrieb mit nur wenigen Moden umzusetzen, insbesondere im Hochleistungsbetrieb. Hierzu müssen zusätzliche Maßnahmen ergriffen werden, vor allem bei einer hohen thermischen Belastung.

Es hat sich allerdings gezeigt, dass die bisher bekannten Maßnahmen zur Optimierung von Lichtwellenleitern für den Hochleistungsbetrieb nicht zuverlässig verhindern können, dass es zu Modeninstabilität bei hohen Leistungen kommt. Dabei wird das Ausgangsignal des Lichtwellenleiters oder eines damit realisierten Faserlasers instabil, sobald eine bestimmte Leistungsschwelle überschritten wird. Es wird Energie von einer Grundmode in Moden höherer Ordnung übertragen. Das z.B. ursprünglich stabil Gauß-förmige Strahlprofil der im Lichtwellenleiter propagierenden Strahlung beginnt sich zu verändern und das Strahlprofil fluktuiert zeitlich aufgrund einer zeitlich veränderlichen Überlagerung der Grundmode mit einer oder mehreren Moden höherer Ordnung. Das Zeitverhalten dieser Fluktuationen kann deterministisch oder, je nach Leistung der propagierenden Strahlung, auch zufällig oder chaotisch sein. Dabei ist es bekannt, dass die Modeninstabilität auf räumlichen Temperaturvariationen innerhalb des Lichtwellenleiters aufgrund der Modeninterferenz basiert. Diese bewirkt eine räumlich und zeitlich veränderliche Strahlungsabsorption im Material des Lichtwellenleiters. Aufgrund thermooptischer Effekte wirkt sich dies unmittelbar auf die Lichtführung aus. Durch das sich aufgrund der Modeninterferenz einstellende räumliche Temperaturprofil des Lichtwellenleiters entsteht eine Gitterstruktur des Brechungsindexprofils, die einen Energietransfer zwischen den verschiedenen Moden der propagierenden Strahlung begünstigt.

Mu et al. ("Double clad YAG crystalline fiber waveguides for diode pumped high power lasing", Proc. of SPIE, Bd. 8959, 28. Februar 2014, S. 895906-1 / 895906-9) beschreiben einen kristallinen Doppelmantel-Lichtwellenleiter (CFW). Dieser besteht aus einem Yb:YAG-Kern, einem undotierten YAG-Innenmantel und einem keramischem Spinell-Außenmantel. Der Lichtwellenleiter kommt in einem Master-Oszillator-Verstärker-(MOPA)-Experiment zum Einsatz.

Mu et al. ("True crystalline fibers: double-clad LMA design concept of Tm:YAG-core fiber and its mode simulation", FIBER LASERS IX: TECHNOLOGY, SYSTEMS, AND APPLICATIONS, SPIE, Bd. 8237, Nr. 1, 8. März 2012, Seiten 1-5) beschreiben des Weiteren einen doppelt ummantelten Lichtwellenleiter mit einem einkristallinen, rechteckigen Kern aus Tm:YAG als Verstärkungsmedium für einen LMA-Faserlaser. Der Lichtwellenleiter verwendet undotierten YAG und keramischen Spinell für die Innen- bzw. Außenbeschichtung. Die Struktur weist eine große numerische Apertur für den undotierten YAG-Innenmantel auf, der zum optischen Pumpen zur Verfügung steht.

Die US 2013/235448 A1 offenbart eine optische Verstärkeranordnung zur Verstärkung ultrakurzer gepulster Laserstrahlung. Die Anordnung umfasst einen modengekoppelten Laser und zwei oder mehr in Propagationsrichtung nach dem Laser angeordneten optischen Verstärkern. Zwischen dem Laser und den optischen Verstärkern befindet sich mindestens ein Aufteilungselement, welches die gepulste Laserstrahlung auf mehrere Verstärkerkanäle aufteilt. Den Verstärkerkanälen ist mindestens ein gemeinsames Kombinationselement nachgeordnet ist, welches die in den Verstärkerkanälen verstärkte gepulste Laserstrahlung kohärent überlagert.

Die WO 2014/087468 A1 offenbart einen Lichtwellenleiter, bei dem ein transparentes Element und ein Lasermedium zwischen einem ersten Mantel und einem zweiten Mantel sandwichartig angeordnet sind. Pumplicht wird aus einer Richtung senkrecht zu den optischen Achsen der erzeugten Laserstrahlung einfallen gelassen und breitet sich abwechselnd durch das transparente Element und das zickzackförmige Lasermedium aus.

Vor diesem Hintergrund ist es Aufgabe der Erfindung, eine optische Anordnung mit einem Lichtwellenleiter für den Hochleistungsbetrieb bereitzustellen, die hinsichtlich Modeninstabilität gegenüber dem Stand der Technik verbessert ist.

Diese Aufgabe löst die Erfindung durch eine optische Anordnung mit den Merkmalen des Anspruchs 1.

Die Erfindung betrifft eine optische Anordnung mit
- einem Aufteilungselement, das einen Eingangsstrahl in mindestens zwei Teilstrahlen aufteilt,
- wenigstens einem Mehrkern-Lichtwellenleiter, durch den die Teilstrahlen propagieren, wobei jeder Kernbereich jeweils einen Teilstrahl führt, und
- wenigstens einem Kombinationselement, das die Teilstrahlen in einem Ausgangsstrahl räumlich überlagert.

Die Erfindung basiert auf dem Ansatz, das Auftreten von Modeninstabilität zu vermeiden bzw. die Leistungsschwelle, ab der Modeninstabilität auftritt, zu höheren Werten hin zu verschieben, indem im Lichtwellenleiter für die Lichtführung ein Material mit gegenüber dem Stand der Technik verbesserten thermischen und thermooptischen Eigenschaften verwendet wird. Kristalline Materialien, wie Yttrium-Aluminium-Granat, Saphir oder Diamant sind bekannt für ihre exzellenten thermischen Eigenschaften, die um wenigstens eine Größenordnung besser sind als die Eigenschaften von Quarzglas, aus denen herkömmliche Lichtwellenleiter zumeist bestehen. Allein durch den Einsatz von kristallinem Material im Kernbereich des Lichtwellenleiters wird die Schwelle, ab der Modeninstabilität auftritt, signifikant angehoben. Entsprechend kann die durchschnittliche Ausgangsleistung eines Lasers, der mit einem Lichtwellenleiter als aktives Medium arbeitet, deutlich gegenüber dem Stand der Technik erhöht werden.

Kristalline Materialien, insbesondere Yttrium-Aluminium-Granat, sind als aktive Medien in Festkörperlasern aus dem Stand der Technik bekannt. Mit Nd:YAG- oder Yb:YAG-Lasern lässt sich Laserstrahlung mit einer Leistung von über 1000 W erzeugen. Zwar lassen sich mit bekannten Faserlasern bereits heute noch höhere Leistungen erzeugen. Dies belegt allerdings nur das Potenzial von Faserlasern, wenn in diesen kristallines Material in den lichtführenden Bereichen eingesetzt wird, da die bekannten Faserlaser-Konzepte herkömmliche Lichtwellenleiter auf Basis von Quarzglas vorsehen, die den genannten kristallinen Materialien hinsichtlich der thermischen und thermooptischen Eigenschaften, wie erwähnt, deutlich unterlegen sind.

Bei einer möglichen Ausgestaltung des Lichtwellenleiters weist dieser in dem den ersten Mantel bildenden Bereich einen niedrigeren Brechungsindex auf als im Kernbereich. Dies entspricht dem herkömmlichen Design von Lichtwellenleitern.

Alternativ kann der Kernbereich durch eine Mehrzahl von entlang der Längserstreckung des Lichtwellenleiters verlaufenden Kanälen gebildet sein, die, im Querschnitt des Lichtwellenleiters gesehen, um den Kernbereich herum angeordnet sind, wobei der Lichtwellenleiter in den die Kanäle bildenden Bereichen einen gegenüber dem jeweiligen Kernbereich niedrigeren Brechungsindex aufweist. Die den Kernbereich umgrenzenden Kanäle bewirken bei dieser Ausgestaltung die Lichtführung im Kernbereich.

Für den Einsatz des Lichtwellenleiters als optischer Verstärker, beispielsweise in einem Faserlaser, weist der Lichtwellenleiter, im Querschnitt gesehen, zumindest einen mit Seltenerdionen dotierten Bereich auf, der zumindest teilweise mit dem Kernbereich überlappt. In Kombination mit einem geeigneten Pumplicht, das neben der eigentlichen Nutzstrahlung im Lichtwellenleiter propagiert, bewirkt die Dotierung stimulierte Emission und damit Verstärkung der Nutzstrahlung.

Bei einer weiter bevorzugten Ausgestaltung des Lichtwellenleiters ist ein zweiter Mantel vorgesehen, der, im Querschnitt des Lichtwellenleiters gesehen, den ersten Mantel umschließt, wobei der Lichtwellenleiter in dem den zweiten Mantel bildenden Bereich einen niedrigeren Brechungsindex aufweist als im Bereich des ersten Mantels. Auf diese Weise entsteht eine Doppelmantelstruktur. Der zweite Mantel schirmt die Anordnung aus Kern und erstem Mantel gegenüber der Umgebung optisch ab. Der erste Mantel kann für die Propagation von Pumplicht in dem Lichtwellenleiter dienen. Die unterschiedlichen Brechungsindizes des ersten und zweiten Mantels bewirken dabei die Führung des Pumplichts in dem Lichtwellenleiter.

Bei einer besonders bevorzugten Ausgestaltung besteht der Lichtwellenleiter nicht nur im Kernbereich aus kristallinem Material, sondern auch im Bereich des ersten und/oder zweiten Mantels, um deren thermische und thermooptische Eigenschaften ebenfalls zu optimieren. Alternativ können der erste und/oder der zweite Mantel aus keramischem Material oder auch aus Glas, beispielsweise Quarzglas bestehen.

Bevorzugt weisen der Kernbereich und der erste und/oder der zweite Mantel des Lichtwellenleiters jeweils einen rechteckigen oder quadratischen Querschnitt auf, wobei die Kantenlängen kleiner sind als die Länge des Lichtwellenleiters. Die Länge des Lichtwellenleiters sollte zumindest das Zehnfache der Rayleigh-Länge des in dem Lichtwellenleiter propagierenden Lichts betragen. Herkömmliche Lichtwellenleiter weisen typischerweise einen kreisrunden oder elliptischen Querschnitt auf. Dies resultiert jedoch im Wesentlichen aus dem Herstellungsprozess, der bei herkömmlichen Lichtwellenleitern eingesetzt wird. Die runde Form ist kein optisches Erfordernis. Lichtwellenleiter mit kristallinem Kern und gegebenenfalls auch kristallinem Mantel lassen sich, wie weiter unten noch ausgeführt wird, besser mit einer im Querschnitt rechteckigen Form herstellen. In Bezug auf die Lichtführung bedeutet dies keinen Nachteil. Tatsächlich hat die rechteckige Form sogar Vorteile im Hinblick auf die Wärmeableitung, insbesondere bei mehrere Kerne aufweisenden Lichtwellenleitern, worauf weiter unten noch eingegangen wird.

Ein besonders vielversprechendes Konzept zur Anhebung der Schwelle von Modeninstabilität ist der Einsatz von Mehrkern-Lichtwellenleitern, das heißt Lichtwellenleitern, die nebeneinander mehrere unabhängige aktive, d.h. geeignet dotierte Kernbereiche aufweisen. Es zeigt sich, dass die Leistungsschwelle, ab der Modeninstabilität auftritt, in etwa mit der Zahl der Kerne in einem Mehrkern-Lichtwellenleiter skaliert. Dem Konzept liegt zugrunde, dass der zu verstärkende Lichtstrahl vor der Einkopplung in den Lichtwellenleiter in Teilstrahlen aufgeteilt wird, wobei jeder der Kernbereiche des Mehrkern-Lichtwellenleiters jeweils einen Teilstrahl führt. Nach Durchlaufen des Lichtwellenleiters werden die Teilstrahlen wieder in einem einzelnen Ausgangsstrahl überlagert. Erfindungsgemäß ist entsprechend vorgesehen, dass der Lichtwellenleiter eine Mehrzahl von Kernbereichen aufweist, die, im Querschnitt des Lichtwellenleiters gesehen, voneinander beabstandet neben- und/oder übereinander angeordnet sind. Auf diese Weise entsteht ein mehrkerniger kristalliner Lichtwellenleiter, bei dem die erzielbare Ausgangsleistung gegenüber dem Stand der Technik angehoben ist. Dabei hat die Anordnung mehrerer Kerne in einer gemeinsamen Lichtwellenleiterstruktur den Vorteil, dass alle Licht führenden Kernbereiche identischen Umgebungseinflüssen (zum Beispiel identischen Temperaturschwankungen) ausgesetzt sind. Das bedeutet, dass keine signifikanten relativen Schwankungen der optischen Weglängen der Teilstrahlen in dem Lichtwellenleiter auftreten, was zu Störungen bei der Vereinigung der Teilstrahlen im Ausgangsstrahl führen würde.

Bei einer bevorzugten Ausgestaltung des Mehrkern- Lichtwellenleiters sind die Kernbereiche von einem gemeinsamen ersten Mantel umgeben, ebenso kann jeder Kernbereich von einem jeweils nur diesem Kernbereich zugeordneten ersten Mantel umgeben sein, um die einzelnen Kerne besser voneinander abzuschirmen.

Bei einer weiter bevorzugten Ausgestaltung des Lichtwellenleiters ist ein Isolationsbereich vorgesehen, der, im Querschnitt des Lichtwellenleiters gesehen, zwischen wenigstens zwei Kernbereichen angeordnet ist, wobei der Lichtwellenleiter im Isolationsbereich eine gegenüber den übrigen Bereichen reduzierte Wärmeleitfähigkeit aufweist. Auf diese Weise wird verhindert, dass eine thermische Wechselwirkung zwischen den verschiedenen Kernbereichen des Mehrkern-Lichtwellenleiters auftritt. Zumindest wird eine entsprechende Wechselwirkung reduziert. Eine solche thermische Wechselwirkung könnte wiederum zu einer Herabsetzung der Leistungsschwelle, ab der Modeninstabilität auftritt, führen. Zur Vermeidung der gegenseitigen thermischen Beeinflussung der Kernbereiche können diese in der den ersten Mantel bildenden Matrix der Lichtwellenleiterstruktur geometrisch optimiert angeordnet sein, um thermische Wechselwirkungen zu minimieren bzw. eine wechselseitig möglichst symmetrische thermische Wechselwirkung zwischen den Kernbereichen zu erzielen.

Besonders bevorzugt weisen das Aufteilungselement und/oder das Kombinationselement jeweils ein teilreflektives Element auf, das die Strahlung des Eingangsstrahls bzw. des Ausgangsstrahls zwei- oder mehrfach reflektiert, wobei das teilreflektive Element Zonen unterschiedlicher Reflektivität aufweist.

Es erfolgt eine Aufteilung des Eingangsstrahls in mehrere Teilstrahlen, so dass mehrere möglichst unabhängige Kanäle für die propagierende Strahlung verwendet werden. In der optischen Anordnung fungiert der Lichtwellenleiter als Multikanalelement, durch das die Teilstrahlen räumlich voneinander getrennt propagieren. Zur optischen Verstärkung kann die Führung der Pumpstrahlung in dem Lichtwellenleiter in mehreren getrennten Mantelbereichen als Pumpkanälen oder in einem gemeinsamen Mantelbereich als Pumpkanal erfolgen.

Die erfindungsgemäße optische Anordnung weist bevorzugt ein kompaktes und winkeldispersionsfreies Aufteilungs- und Kombinationselement zur Aufteilung bzw. Kombination der Strahlung auf. Das Aufteilungselement und das Kombinationselement sind bevorzugt identisch ausgebildet, so dass die Aufteilung und die Kombination der Strahlung symmetrisch erfolgen. Erfindungsgemäß weisen das Aufteilungselement und/oder das Kombinationselement bevorzugt jeweils ein teilreflektives Element auf, das die Strahlung des Eingangsstrahls bzw. des Ausgangsstrahls zwei- oder mehrfach reflektiert, wobei das teilreflektive Element Zonen unterschiedlicher Reflektivität aufweist. Die Strahlung des Eingangsstrahls bzw. des Ausgangsstrahls wird, mit anderen Worten, nacheinander an den verschiedenen Zonen des teilreflektiven Elementes, d.h. bei jedem Teilreflektionsvorgang mit einer anderen Reflektivität, reflektiert. Dabei wird z.B. die Reflektivität der Zonen des teilreflektiven Elementes entlang einer in der Reflektionsebene der Strahlung liegenden Richtung kleiner bzw. größer, je nachdem ob es sich um das Aufteilungs- oder das Kombinationselement handelt. Die unterschiedliche (abnehmende bzw. ansteigende) Reflektivität bewirkt, dass, z.B. im Aufteilungselement, jeder Teilstrahl, der bei einem der nacheinander erfolgenden Teilreflektionsvorgänge als nicht reflektierter Anteil des Eingangsstrahls erzeugt wird, eine bestimmte, vorzugsweise gleiche Intensität erhält.

Zweckmäßig weisen das Aufteilungselement und/oder das Kombinationselement weiterhin jeweils ein reflektives Element auf, wobei die Strahlung dann zwischen teilreflektivem und reflektivem Element mehrfach hin und her reflektiert wird. Dabei kann die Oberfläche des reflektiven Elementes planparallel zu der Oberfläche des teilreflektiven Elementes sein. Zweckmäßig fällt die Strahlung schräg, d.h. unter einem von 90° abweichenden Winkel auf das teilreflektive Element ein, so dass die Teilstrahlen nach der Aufteilung in einer gemeinsamen Ebene, parallel und mit äquidistantem Abstand propagieren. Dabei ist der Einfallswinkel so zu wählen, dass die Strahlung nacheinander an den Zonen unterschiedlicher Reflektivität teilreflektiert wird.

Der Lichtwellenleiter kann auf verschiedene Art und Weise hergestellt werden.

Ein mögliches Herstellungsverfahren weist die folgenden Verfahrensschritte auf:
- Einbringen wenigstens einer Vertiefung in ein erstes Substratstück,
- epitaktisches Aufwachsen eines den Kernbereich bildenden kristallinen Materials auf dem ersten Substratstück,
- Entfernen des kristallinen Materials von der Oberfläche des ersten Substratstücks, so dass das kristalline Material nur im Bereich der Vertiefung verbleibt, und
- Aufbringen eines zweiten Substratstücks auf die Oberfläche des ersten Substratstücks und Verbinden der beiden Substratstücke, so dass diese gemeinsam den ersten Mantel bilden.

Als Substrat wird bei diesem Herstellungsverfahren dasjenige Material des Lichtwellenleiters verwendet, das im fertigen Lichtwellenleiter den ersten Mantel bildet. In das Substrat wird zunächst, zum Beispiel durch chemisches Ätzen, eine Vertiefung in Richtung der Längserstreckung des Lichtwellenleiters eingebracht. Zur Herstellung eines Mehrkern-Lichtwellenleiters werden nebeneinander mehrere Vertiefungen in das erste Substratstück eingebracht. Die Vertiefung wird dann mit dem dotierten Material ausgefüllt, das in dem fertigen Lichtwellenleiter den Kernbereich bildet. Zur Erzeugung des kristallinen Kerns wird das Material epitaktisch auf dem ersten Substratstück aufgewachsen. Im nächsten Schritt wird das kristalline Material, zum Beispiel durch Schleifen oder Polieren, wieder von der Oberfläche des ersten Substratstücks entfernt, so dass das kristalline Material des Kerns nur im Bereich der Vertiefung bzw. der Vertiefungen verbleibt. Ein zweites Substratstück, das gemeinsam mit dem ersten Substratstück den ersten Mantel des Lichtwellenleiters bildet, wird dann auf das erste Substratstück aufgebracht und mit diesem, ohne oder mit einem geeigneten Adhäsiv, verbunden. Gegebenenfalls kann der so erzeugte Lichtwellenleiter an seinen äußeren Oberflächen mit weiterem Material bedeckt werden, das den zweiten Mantel des Lichtwellenleiters bildet.

Ein Ausführungsbeispiel der Erfindung wird in Figur 8 dargestellt. Die Figuren 1 bis 7 erläutern Lichtwellenleiter die in der optischen Anordnung der Figur 8 eingesetzt werden können.

Es zeigen:
- Figur 1:: geschnittene Draufsicht eines Lichtwellenleiters mit mehreren nebeneinander angeordneten Kernen;
- Figur 2:: Querschnittdarstellung eines Lichtwellenleiters mit neben- und übereinander angeordneten Kernen;
- Figur 3:: Querschnittdarstellung eines Lichtwellenleiters mit optimierter Anordnung der Kernbereiche;
- Figur 4:: geschnittene Draufsicht eines Lichtwellenleiters mit außerhalb der Kerne angeordneter Dotierung;
- Figur 5:: geschnittene Draufsicht eines Lichtwellenleiters mit von Kanälen umgrenzten Kernbereichen;
- Figur 6:: Querschnittdarstellung eines Lichtwellenleiters mit Kühlelementen;
- Figur 7:: Querschnittdarstellung eines Lichtwellenleiters mit thermischen Isolationsbereichen zwischen den Kernbereichen;
- Figur 8:: schematische Darstellung einer optischen Anordnung mit Lichtwellenleiter.

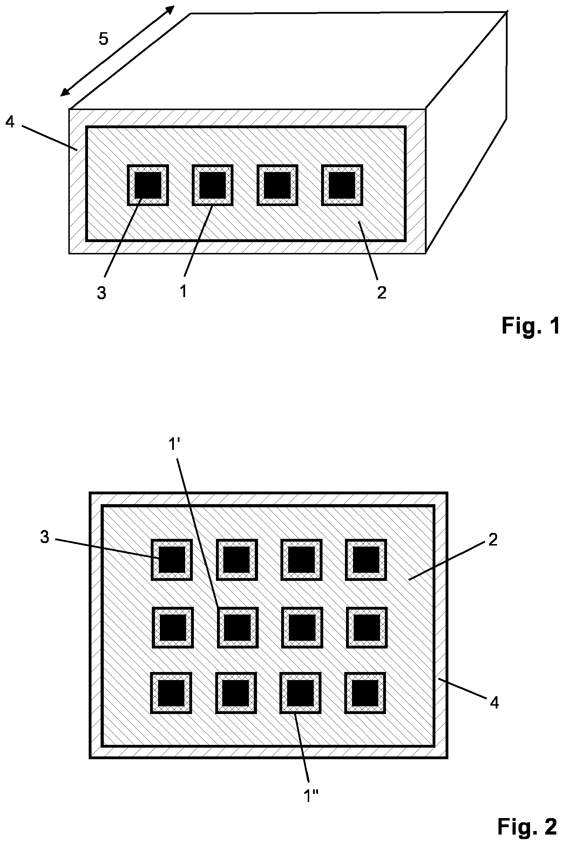

Figur 1 zeigt einen Lichtwellenleiter in einer geschnittenen Draufsicht. Im Querschnitt gesehen weist der Lichtwellenleiter vier verschiedene Bereiche auf, die aus unterschiedlichen Materialien mit unterschiedlichen optischen Eigenschaften bestehen. Jeder der Bereiche erstreckt sich jeweils über die gesamte Längserstreckung des Lichtwellenleiters. Der in der Figur 1 dargestellte Lichtwellenleiter weist vier nebeneinander angeordnete Kernbereiche 1 auf. Die Kernbereiche 1 sind von einem gemeinsamen ersten Mantel 2 umgeben, der einen niedrigeren Brechungsindex aufweist als die Kernbereiche 1. Die Kernbereiche 1 weisen in ihrem Zentrum jeweils einen mit Seltenerdionen dotierten Bereich 3 auf. Ein zweiter Mantel 4, der seinerseits einen niedrigeren Brechungsindex aufweist als der erste Mantel 2, umschließt die Anordnung aus Kernen 1 und erstem Mantel 2 und schirmt diese nach außen optisch ab. Die Länge 5 des Lichtwellenleiters ist um ein Vielfaches größer als die Kantenlängen der quadratisch bzw. rechteckig ausgebildeten Kernbereiche 1 und Mantelbereiche 2 bzw. 4. Die Länge 5 des Lichtwellenleiters beträgt zumindest das Zehnfache der Rayleigh-Länge des in dem Lichtwellenleiter propagierenden Lichts. Erfindungsgemäß bestehen die Kernbereiche 1 aus kristallinem Material, beispielsweise aus Yttrium-Aluminium-Granat. Auch die Mantelbereiche 2 und 4 bestehen vorzugsweise aus kristallinem Material. Dies ist allerdings keine Notwendigkeit. Die Mantelbereiche 2 und 4 können ebenso aus keramischem Material oder aus Glas bestehen. Der zweite Mantel 4 ist optional. Der Lichtwellenleiter kann alternativ einen Mantel aus Luft aufweisen. Während die Figur 1 einen Mehrkern-Lichtwellenleiter mit einer eindimensionalen Anordnung der Kerne 1 zeigt, ist in Figur 2 ein Mehrkern-Lichtwellenleiter gemäß der Erfindung mit einer, im Querschnitt des Lichtwellenleiters gesehen, zweidimensionalen Anordnung der Kerne gezeigt, in der die Kernbereiche voneinander beabstandet neben- und übereinander angeordnet sind.

Bei den in den Figuren 1 und 2 dargestellten Lichtwellenleitern sind keine besonderen Maßnahmen getroffen, die Kernbereiche 1 thermisch voneinander abzuschirmen. Die thermischen Einflussbereiche der Kerne 1 erstrecken sich deutlich über die dotierten Bereiche 3 hinaus, so dass eine thermische Kopplung zwischen den verschiedenen Kernbereichen 1 nicht auszuschließen ist. Die thermische Kopplung kann durch die Anordnung der Kernbereiche 1 über den Querschnitt des Lichtwellenleiters gezielt beeinflusst werden. Beispielsweise bei der Anordnung in der Figur 2 sind die beiden zentralen Kernbereiche 1' jeweils von acht anderen Kernen umgeben. Die in der Peripherie angeordneten Kernbereiche 1" sind jeweils von drei oder von fünf anderen Kernen umgeben. Das bedeutet, dass die Wahrscheinlichkeit thermischer Wechselwirkung zwischen den Kernbereichen 1', 1" bei den zentralen Kernbereichen 1' größer ist als bei den peripheren Kernbereichen 1".

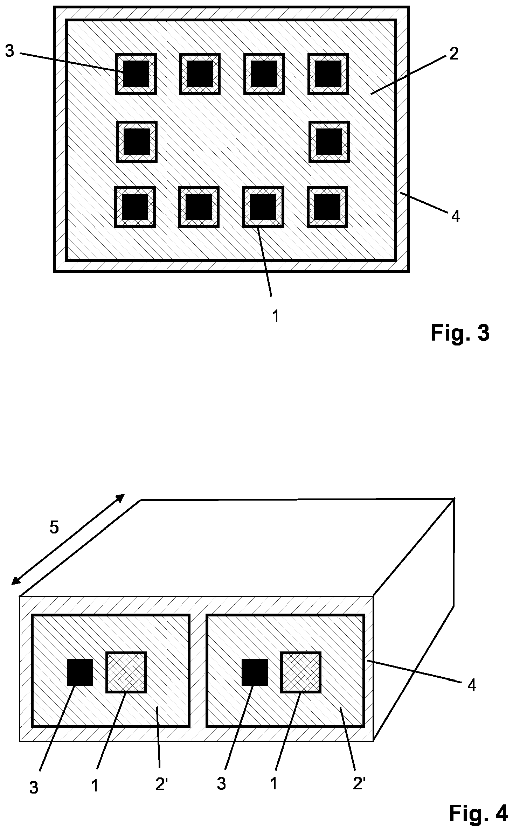

Die Figur 3 zeigt einen modifizierten Lichtwellenleitern, bei dem jeder Kernbereich 1 von zwei weiteren Kernbereichen umgeben ist, so dass alle Kernbereiche 1 eine ähnliche thermische Wechselwirkung mit den anderen Kernen aufweisen. Dadurch kann die Leistung des Lichtwellenleiters verbessert werden. Insbesondere kann die Schwelle, ab der Modeninstabilität auftritt, weiter angehoben werden.

Bei den Lichtwellenleitern der Figuren 1-3 sind alle Kernbereiche 1 von einem gemeinsamen ersten Mantelbereich 2 umgeben. Bei dem in der Figur 4 dargestellten Ausführungsbeispiel ist jeder Kernbereich 1 von einem jeweils nur diesem Kernbereich zugeordneten ersten Mantel 2' geben, um die einzelnen Kanäle des Mehrkern-Lichtwellenleiters besser voneinander abzuschirmen. Die beiden ersten Mantelbereiche 2' sind von einem gemeinsamen zweiten Mantelbereich 4 umgeben. Außerdem liegt bei dem in der Figur 4 dargestellten Ausführungsbeispiel der dotierte Bereich 3 etwas außerhalb des Kernbereichs 1. Die Anordnung des dotierten Bereichs 3 relativ zu dem lichtführenden Kernbereich 1 und gegebenenfalls die Überlappung des dotierten Bereichs 3 mit dem Kernbereich 1 kann gezielt gewählt werden, um die Verstärkung einzelner Moden des in dem Lichtwellenleiter propagierenden Lichts zu begünstigen bzw. zu unterdrücken.

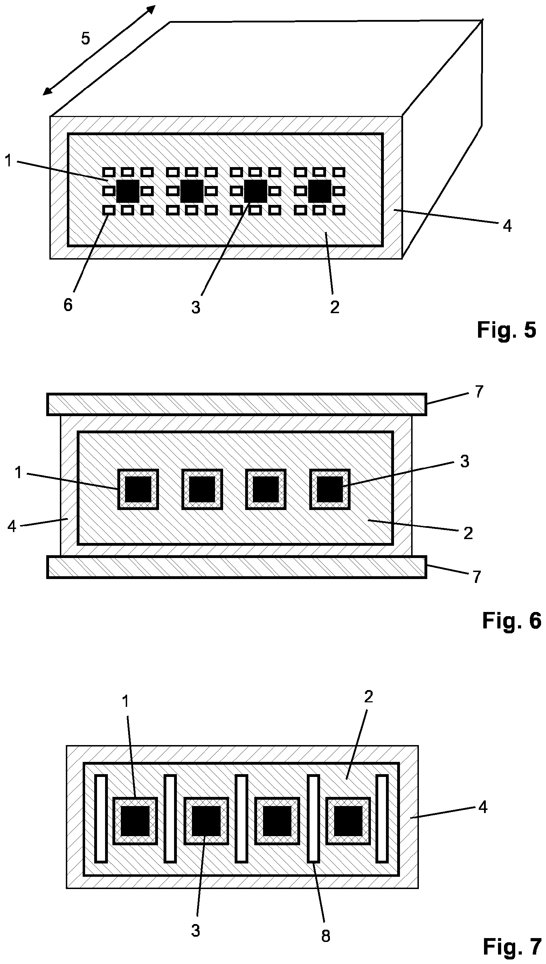

Bei dem in der Figur 5 gezeigten Lichtwellenleitern werden die Kernbereiche 1 durch eine Mehrzahl von entlang der Längserstreckung des Lichtwellenleiters verlaufenden Kanälen 6 gebildet, die, im dargestellten Querschnitt des Lichtwellenleiters gesehen, um jeden Kernbereich 1 herum angeordnet sind, wobei der Lichtwellenleiter in den die Kanäle 6 bildenden Bereichen einen gegenüber dem jeweiligen Kernbereich 1 bzw. dem Mantel 2 niedrigeren Brechungsindex aufweist. Innerhalb der von den Kanälen 6 umgrenzten Bereiche weist der Lichtwellenleiter im Wesentlichen denselben Brechungsindex auf wie im Bereich des ersten Mantels 2. Die Kanäle 6 bewirken die Lichtführung in den Kernbereichen 1. Die Kanäle 6 können gezielt angeordnet werden, um die Lichtführung zu beeinflussen und um eine Lokalisierung einer Gauß-artigen Grundmode im Kernbereich und eine gleichzeitige Delokalisierung von Moden höherer Ordnung zu erreichen, damit deren Propagation in dem Lichtwellenleiter möglichst unterdrückt wird. Durch diese Strategie kann die Leistungsschwelle, ab der Modeninstabilität auftritt, weiter angehoben werden. Die Kanäle 6 können aus kristallinem oder nicht-kristallinem Material bestehen, wobei auch hier kristallines Material bevorzugt wird. Möglich ist es, die Kanäle 6 aus Material mit geringer Wärmeleitfähigkeit (zum Beispiel Luft) herzustellen, so dass die Kanäle 6 gleichzeitig als thermische und optische Barriere zwischen den Kernbereichen 1 dienen. Auch bei der Ausgestaltung mit Kanälen 6 zur Bildung der Kernbereiche 1, wie in Figur 5 dargestellt, kann statt des gemeinsamen ersten Mantels 2 vorgesehen sein, dass jedem Kernbereich 1 jeweils nur ein erster Mantel 2' zugeordnet ist, ähnlich wie in Figur 4 dargestellt.

Bei sämtlichen der in den Figuren dargestellten Anordnungen weist der Lichtwellenleiter, wie erwähnt, einen rechteckigen Querschnitt auf. Diese Geometrie ist im Hinblick auf die Herstellung des Lichtwellenleiters aus kristallinen Materialien vorteilhaft. Der rechteckige Querschnitt hat weitere Vorteile, wie zum Beispiel aus der Figur 6 ersichtlich. Der dargestellte Lichtwellenleiter ist ausgebildet wie in Figur 1 dargestellt. Zur Wärmeabfuhr sind an den oberen und unteren Flächen des Lichtwellenleiters plattenförmige Kühlelemente 7 angeordnet. Aufgrund der flachen Form des Lichtwellenleiters kann die in den dotierten Kernbereichen 1 bei der optischen Verstärkung anfallende Wärme besonders effektiv abgeführt werden. Im Hinblick auf die Vermeidung von Modeninstabilität ist dabei von Vorteil, dass alle Kernbereiche 1 von den Kühlelementen 7 denselben Abstand haben, so dass für eine gleichmäßige Kühlung gesorgt ist.

Bei dem in Figur 7 dargestellten Lichtwellenleitern sind Isolationsbereiche 8 zwischen den Kernbereichen 1 angeordnet, wobei der Lichtwellenleiter in den Isolationsbereichen 8 jeweils eine gegenüber den übrigen Bereichen reduzierte Wärmeleitfähigkeit aufweist. Die Isolationsbereiche dienen zur Vermeidung thermischer Kopplung zwischen den Kernbereichen 1, um Modeninstabilität zu vermeiden. Die Isolationsbereiche können aus Luft oder aus anderen geeigneten Materialien bestehen.

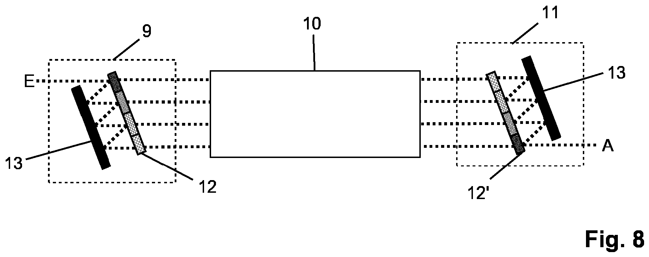

Die in der Figur 8 dargestellte optische Anordnung weist ein Aufteilungselement 9 auf, das einen Eingangsstrahl E in mehrere räumlich separate Teilstrahlen aufteilt. Diese Teilstrahlen propagieren durch einen Lichtwellenleiter 10, der entsprechend als Mehrkern-Lichtwellenleiter ausgebildet ist, wie in den Figuren 1 bis 7 dargestellt. Jeder Kernbereich 1 des Lichtwellenleiters führt dabei jeweils einen Teilstrahl. Des Weiteren ist ein Kombinationselement 11 vorgesehen, das die Teilstrahlen in einem Ausgangsstrahl A räumlich überlagert. Das Aufteilungselement 9 umfasst zwei Elemente, nämlich ein teilreflektives Element 12 und ein reflektives Element 13. Bei dem reflektiven Element 13 handelt es sich um einen Spiegel mit möglichst hoher Reflektivität. Das teilreflektive Element 12 reflektiert einen Teil der (z.B. von einem Pulslaser) einfallenden Strahlung E. Der nicht reflektierte Teil wird transmittiert und erzeugt einen Teilstrahl. Das teilreflektive Element 12 besteht aus N (in dem dargestellten Ausführungsbeispiel gilt N=4) Zonen mit unterschiedlicher Reflektivität. Der Eingangsstrahl E wird zwischen dem teilreflektiven Element 12 und dem dazu gegenüberliegend mit Abstand angeordneten, planparallelen reflektiven Element 13 mehrfach hin und her reflektiert. Die Reflektivitäten der Zonen des teilreflektiven Elementes 12 sind so gewählt, dass der einfallende Eingangsstrahl E in einem bestimmten Verhältnis auf die N Teilstrahlen aufgeteilt wird. Die erzeugten Teilstrahlen sind hierbei parallel und äquidistant. Das Kombinationselement 11 hat einen gleichen Aufbau mit teilreflektivem Element 12' und reflektivem Element 13'. Das Kombinationselement 11 überlagert die Teilstrahlen in einem Ausgangsstrahl A. Dabei ist es in der Weise antisymmetrisch zu dem Aufteilungselement 1 angeordnet, dass sich die entstehenden Weglängenunterschiede der N Teilstrahlen genau aufheben. Aufgrund der Integration der 1:N-Teilung bzw. -Kombination in jeweils einem einzelnen Element 9 bzw. 11 ist eine kompakte Bauweise möglich, und es wird eine einfache Justage gewährleistet.

## Patentansprüche

1. Optische Anordnung mit
- einem Aufteilungselement (9), das einen Eingangsstrahl (E) in mindestens zwei räumlich getrennte Teilstrahlen aufteilt,
- wenigstens einem Lichtwellenleiter (10), durch den die Teilstrahlen propagieren, und
- wenigstens einem Kombinationselement (11), das die Teilstrahlen in einem Ausgangsstrahl (A) räumlich überlagert,
**dadurch gekennzeichnet,**
**dass** der Lichtwellenleiter (10) eine Mehrzahl von entlang der Längserstreckung des Lichtwellenleiters (10) verlaufenden Kernbereichen (1) aufweist, die, im Querschnitt des Lichtwellenleiters gesehen, voneinander beabstandet neben- und/oder übereinander angeordnet sind, und einen ersten Mantel (2), der, im Querschnitt des Lichtwellenleiters gesehen, die Kernbereiche (1) umschließt, wobei der Lichtwellenleiter (10) wenigstens in den Kernbereichen (1) aus kristallinem Material besteht, wobei jeder Kernbereich (1) jeweils einen Teilstrahl führt, wobei der Mantel (2) aus einem einheitlichen, undotierten Material besteht, wobei der Lichtwellenleiter (10), im Querschnitt gesehen, mit Seltenerdionen dotierte Bereiche (3) aufweist, die zumindest teilweise mit den Kernbereichen (1) überlappen.

2. Optische Anordnung nach Anspruch 1, **dadurch gekennzeichnet, dass** der Lichtwellenleiter (10) in dem den ersten Mantel bildenden Bereich (2) einen niedrigeren Brechungsindex aufweist als in den Kernbereichen (1).

3. Optische Anordnung nach Anspruch 1, **dadurch gekennzeichnet, dass** die Kernbereiche (1) jeweils durch eine Mehrzahl von entlang der Längserstreckung des Lichtwellenleiters (10) verlaufende Kanäle (6) gebildet werden, die, im Querschnitt des Lichtwellenleiters gesehen, um die Kernbereiche (1) herum angeordnet sind, wobei der Lichtwellenleiter (10) in den die Kanäle (6) bildenden Bereichen einen gegenüber dem Kernbereich (1) niedrigeren Brechungsindex aufweist.

4. Optische Anordnung nach einem der Ansprüche 1 bis 3, **dadurch gekennzeichnet, dass** das kristalline Material Yttrium-Aluminium-Granat, Saphir oder Diamant ist.

5. Optische Anordnung nach einem der Ansprüche 1 bis 4, **gekennzeichnet durch** einen zweiten Mantel (4), der, im Querschnitt des Lichtwellenleiters gesehen, den ersten Mantel (2) umschließt, wobei der Lichtwellenleiter in dem den zweiten Mantel bildenden Bereich (4) einen niedrigeren Brechungsindex aufweist als im Bereich des ersten Mantels (2).

6. Optische Anordnung nach einem der Ansprüche 1 bis 5, **dadurch gekennzeichnet, dass** der Lichtwellenleiter im Bereich des ersten und/oder zweiten Mantels (2, 4) aus einem kristallinen oder keramischen Material oder aus einem Glas besteht.

7. Optische Anordnung nach einem der Ansprüche 1 bis 6, **dadurch gekennzeichnet, dass** die Kernbereiche (1) und der erste und/oder der zweite Mantel (2, 4) jeweils einen rechteckigen oder quadratischen Querschnitt aufweisen.

8. Optische Anordnung nach Anspruch 7, **dadurch gekennzeichnet, dass** der Lichtwellenleiter (10) insgesamt einen rechteckigen oder quadratischen Querschnitt aufweist.

9. Optische Anordnung nach einem der Ansprüche 1 bis 8, **dadurch gekennzeichnet, dass** die Kernbereiche (1) von einem gemeinsamen ersten Mantel (2) umschlossen sind.

10. Optische Anordnung nach Anspruch 9, **dadurch gekennzeichnet, dass** jeder Kernbereich (1) von einem jeweils nur diesem Kernbereich (1) zugeordneten ersten Mantel (2') umgeben ist.

11. Optische Anordnung nach einem der Ansprüche 1 bis 10, **gekennzeichnet durch** einen Isolationsbereich (8), der, im Querschnitt des Lichtwellenleiters gesehen, zwischen wenigstens zwei Kernbereichen (1) angeordnet ist, wobei der Lichtwellenleiter im Isolationsbereich (8) eine gegenüber den übrigen Bereichen reduzierte Wärmeleitfähigkeit aufweist.

12. Optische Anordnung nach einem der Ansprüche 1 bis 11, **gekennzeichnet durch** wenigstens ein an der Oberfläche des ersten oder zweiten Mantels (2, 4) anliegendes Kühlelement (7).

13. Optische Anordnung nach einem der Ansprüche 1 bis 12, **dadurch gekennzeichnet, dass** die Länge des (5) Lichtwellenleiters wenigstens das Zehnfache der Rayleigh-Länge des in dem Lichtwellenleiter propagierenden Lichtes beträgt.

14. Optische Anordnung nach einem der Ansprüche 1 bis 13, **dadurch gekennzeichnet, dass** das Aufteilungselement (9) und/oder das Kombinationselement (11) jeweils ein teilreflektives Element (12, 12') aufweisen, das die Strahlung des Eingangsstrahls (E) bzw. des Ausgangsstrahls (A) zwei- oder mehrfach reflektiert, wobei das teilreflektive Element (12, 12') Zonen unterschiedlicher Reflektivität aufweist.

15. Verfahren zur Herstellung eines Lichtwellenleiters für eine optische Anordnung nach einem der Ansprüche 1 bis 14, aufweisend die folgenden Verfahrensschritte:
- Einbringen wenigstens einer Vertiefung in ein erstes Substratstück,
- epitaktisches Aufwachsen eines den Kernbereich bildenden kristallinen Materials auf dem ersten Substratstück,
- Entfernen des kristallinen Materials von der Oberfläche des ersten Substratstücks, so dass das kristalline Material nur im Bereich der Vertiefung verbleibt, und
- Aufbringen eines zweiten Substratstücks auf die Oberfläche des ersten Substratstücks und Verbinden der beiden Substratstücke, so dass diese gemeinsam den ersten Mantel (2) bilden.

## Claims

1. Optical assembly comprising
- a splitting element (9) which splits an input beam (E) into at least two spatially separated partial beams,
- at least one optical waveguide (10), through which the partial beams propagate, and
- at least one combination element (11) which spatially superimposes the partial beams in an output beam (A),
**characterised in that**
the optical waveguide (10) comprises a plurality of core regions (1) which extend along the longitudinal extension of the optical waveguide (10) and which, viewed in the cross section of the optical waveguide, are arranged so as to be spaced apart, side-by-side and/or one above the other, and a first jacket (2) which, viewed in the cross section of the optical waveguide, surrounds the core regions (1), wherein the optical waveguide (10) consists, at least in the core regions (1), of crystalline material, wherein each core region (1) in each case guides a partial beam, wherein the jacket (2) consists of a uniform, undoped material, wherein the optical waveguide (10), viewed in cross section, comprises regions (3) which are doped with rare earth ions and which overlap with the core regions (1), at least in part.

2. Optical assembly according to claim 1, **characterised in that** the optical waveguide (10) has a lower refractive index in the region (2) forming the first jacket than in the core regions (1).

3. Optical assembly according to claim 1, **characterised in that** the core regions (1) are each formed by a plurality of channels (6) which extend along the longitudinal extension of the optical waveguide (10) and which, viewed in the cross section of the optical waveguide, are arranged around the core regions (1), wherein the optical waveguide (10) has a lower refractive index in the regions forming the channels (6) compared with the core region (1).

4. Optical assembly according to any of claims 1 to 3, **characterised in that** the crystalline material is yttrium aluminium garnet, sapphire, or diamond.

5. Optical assembly according to any of claims 1 to 4, **characterised by** a second jacket (4) which, viewed in the cross section of the optical waveguide, surrounds the first jacket (2), wherein the optical waveguide has a lower refractive index in the region (4) forming the second jacket than in the region of the first jacket (2).

6. Optical assembly according to any of claims 1 to 5, **characterised in that** the optical waveguide consists, in the region of the first and/or second jacket (2, 4), of a crystalline or ceramic material, or of a glass.

7. Optical assembly according to any of claims 1 to 6, **characterised in that** the core regions (1) and the first and/or the second jacket (2, 4) in each case have an rectangular or square cross section.

8. Optical assembly according to claim 7, **characterised in that** the optical waveguide (10) has, overall, a rectangular or square cross section.

9. Optical assembly according to any of claims 1 to 8, **characterised in that** the core regions (1) are surrounded by a common first jacket (2).

10. Optical assembly according to claim 9, **characterised in that** each core region (1) is surrounded by a first jacket (2') that is in each case associated only with said core region (1).

11. Optical assembly according to any of claims 1 to 10, **characterised by** an insulation region (8) which, when viewed in the cross section of the optical waveguide, is arranged between at least two core regions (1), wherein the optical waveguide has a reduced thermal conductivity in the insulation region (8) compared with the remaining regions.

12. Optical assembly according to any of claims 1 to 11, **characterised by** at least one cooling element (7) which is resting against the surface of the first or second jacket (2, 4).

13. Optical assembly according to any of claims 1 to 12, **characterised in that** the length of the (5) optical waveguide is less than a tenth of the Rayleigh length of the light propagating in the optical waveguide.

14. Optical assembly according to any of claims 1 to 13, **characterised in that** the splitting element (9) and/or the combination element (11) in each comprise a partially reflective element (12, 12') which reflects the radiation of the input beam (E) and/or of the output beam (A) twice or multiple times, wherein the partially reflective element (12, 12') have zones of different reflectivity.

15. Method for producing an optical waveguide for an optical assembly according to any of claims 1 to 15, comprising the following method steps:
- making at least one depression into a first substrate piece,
- epitaxial growth of a crystalline material forming the core region onto the first substrate,
- removing the crystalline material from the surface of the first substrate piece, such that the crystalline material remains only in the region of the depression, and
- applying a second substrate piece onto the surface of the first substrate piece and connecting the two substrate pieces, such that these together form the first jacket (2).

## Revendications

1. Ensemble optique avec
- un élément de division (9), qui divise un faisceau d'entrée (E) en au moins deux faisceaux partiels séparés spatialement,
- au moins un guide d'ondes de lumière (10), à travers lequel les faisceaux partiels se propagent, et
- au moins un élément de combinaison (11), qui chevauche spatialement les faisceaux partiels dans un faisceau de sortie (A),
**caractérisé en ce**
**que** le guide d'ondes de lumière (10) présente une multitude de zones de noyau (1) s'étendant le long de l'extension longitudinale du guide d'ondes de lumière (10), qui, vues dans la coupe transversale du guide d'ondes de lumière, sont disposées côte à côte et/ou les unes au-dessus des autres à distance les unes des autres, et une première gaine (2), qui, vue dans la coupe transversale du guide d'ondes de lumière, renferme les zones de noyau (1), dans lequel le guide d'ondes de lumière (10) est constitué au moins dans les zones de noyau (1) d'un matériau cristallin, dans lequel chaque zone de noyau (1) guide respectivement un faisceau partiel, dans lequel la gaine (2) consiste en un matériau homogène non dopé, dans lequel le guide d'ondes de lumière (10) présente, vu dans la coupe transversale, des zones (3) dopées d'ions de terre rare, qui chevauchent au moins en partie les zones de noyau (1).

2. Ensemble optique selon la revendication 1, **caractérisé en ce que** le guide d'ondes de lumière (10) présente, dans la zone (2) formant la première gaine, un indice de réfraction plus faible que dans les zones de noyau (1).

3. Ensemble optique selon la revendication 1, **caractérisé en ce que** les zones de noyau (1) sont formées respectivement par une multitude de canaux (6) s'étendant le long de l'extension longitudinale du guide d'ondes de lumière (10), qui sont disposés, vus dans la coupe transversale du guide d'ondes de lumière, tout autour des zones de noyau (1), dans lequel le guide d'ondes de lumière (10) présente, dans les zones formant les canaux (6), un indice de réfraction plus faible par rapport à la zone de noyau (1).

4. Ensemble optique selon l'une quelconque des revendications 1 à 3, **caractérisé en ce que** le matériau cristallin est du grenat d'yttrium et d'aluminium, du saphir ou du diamant.

5. Ensemble optique selon l'une quelconque des revendications 1 à 4, **caractérisé par** une deuxième gaine (4), qui, vue dans la coupe transversale du guide d'ondes de lumière, renferme la première gaine (2), dans lequel le guide d'ondes de lumière présente, dans la zone (4) formant la deuxième gaine, un indice de réfraction plus faible que dans la zone de la première gaine (2).

6. Ensemble optique selon l'une quelconque des revendications 1 à 5, **caractérisé en ce que** le guide d'ondes de lumière est constitué, dans la zone de la première et/ou de la deuxième gaine (2, 4), d'un matériau cristallin ou céramique ou d'un verre.

7. Ensemble optique selon l'une quelconque des revendications 1 à 6, **caractérisé en ce que** les zones de noyau (1) et la première et/ou la deuxième gaine (2, 4) présentent respectivement une section transversale rectangulaire ou carrée.

8. Ensemble optique selon la revendication 7, **caractérisé en ce que** le guide d'ondes de lumière (10) présente globalement une section transversale rectangulaire ou carrée.

9. Ensemble optique selon l'une quelconque des revendications 1 à 8, **caractérisé en ce que** les zones de noyau (1) sont renfermées par une première gaine (2) commune.

10. Ensemble optique selon la revendication 9, **caractérisé en ce que** chaque zone de noyau (1) est entourée par une première gaine (2') associée respectivement seulement à ladite zone de noyau (1).

11. Ensemble optique selon l'une quelconque des revendications 1 à 10, **caractérisé par** une zone d'isolation (8), qui, vue dans la coupe transversale du guide d'ondes de lumière, est disposée entre au moins deux zones de noyau (1), dans lequel le guide d'ondes de lumière présente dans la zone d'isolation (8) une conductivité thermique réduite par rapport aux autres zones.

12. Ensemble optique selon l'une quelconque des revendications 1 à 11, **caractérisé par** au moins un élément de refroidissement (7) reposant sur la surface de la première ou de la deuxième gaine (2, 4).

13. Ensemble optique selon l'une quelconque des revendications 1 à 12, **caractérisé en ce que** la longueur du guide d'ondes de lumière est égale au moins à 10 fois la longueur de Rayleigh de la lumière se propageant dans le guide d'ondes de lumière.

14. Ensemble optique selon l'une quelconque des revendications 1 à 13, **caractérisé en ce que** l'élément de division (9) et/ou l'élément de combinaison (11) présentent respectivement un élément en partie réfléchissant (12, 12'), qui réfléchit deux fois ou à plusieurs reprises le rayonnement du faisceau d'entrée (E) ou du faisceau de sortie (A), dans lequel l'élément en partie réfléchissant (12, 12') présente des zones à réflectivité différente.

15. Procédé de fabrication d'un guide d'ondes de lumière pour un ensemble optique selon l'une quelconque des revendications 1 à 14, présentant les étapes de procédé suivantes :
- la réalisation d'au moins un renfoncement dans une première pièce de substrat,
- la croissance par épitaxie d'un matériau cristallin formant la zone de noyau sur la première pièce de substrat,
- le retrait du matériau cristallin de la surface de la première pièce de substrat si bien que le matériau cristallin reste seulement dans la zone du renfoncement, et
- l'application d'une deuxième pièce de substrat sur la surface de la première pièce de substrat et la liaison des deux pièces de substrat de sorte que celles-ci forment conjointement la première gaine (2).
